# EUROPEAN PATENT SPECIFICATION

(11) **EP 3 305 447 B1**
(45) Date of publication and mention of the grant of the patent: **29.03.2023**
(21) Application number: 16889695.9
(22) Date of filing: 14.02.2016
(51) Int. Cl.: B23B 51/02, B23B 51/00

(54) **STEP-STRUCTURED TWIST DRILL**
STUFENSTRUKTURIERTER SPIRALBOHRER
FORET HÉLICOÏDAL À STRUCTURE ÉTAGÉE

(43) Date of publication of application: 11.04.2018
(73) Proprietor: Tec-Spiral Enterprises Tools Co., Ltd., Songjiang, Shanghai 201613 (CN)
(72) Inventor: WANG, Hongjia, Shanghai 201612 (CN)
(74) Representative: Dilg, Andreas
(86) International application number: PCT/CN2016/073767
(87) International publication number: WO 2017/136966

(56) References cited:
- WO-A1-97/31741
- CN-A- 1 375 373
- CN-A- 102 126 039
- CN-A- 103 084 629
- CN-B- 101 977 713
- CN-U- 202 180 238
- CN-U- 203 356 678
- CN-U- 203 649 486
- CN-U- 204 953 985
- CN-U- 205 551 557
- GB-A- 2 318 072
- US-A- 5 466 100
- US-A1- 2014 363 244

## Description

### TECHNICAL FIELD

The present disclosure relates to an efficient twist drill for layered drilling.

### BACKGROUND

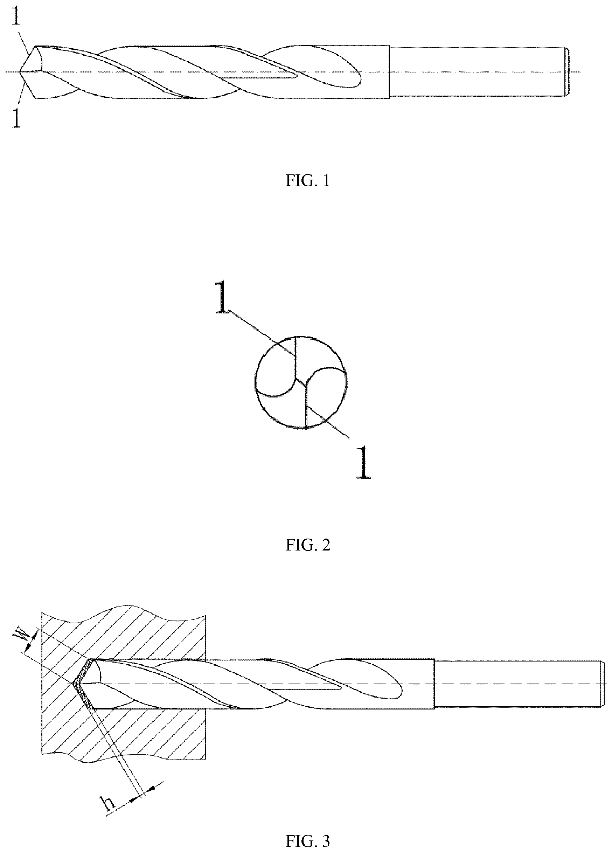

If a usual twist drill (comprising a straight shank and a taper shank), with reference to Fig. 1 (the straight shank), is used in a workplace away from a drilling machine and other metal cutting machine tools, when a handheld electric tool is used for drilling operation, the drilling efficiency is greatly constrained due to limitation of arm strength of a worker, power of the electric tool and the like, thereby resulting in difficult drilling positioning, low speed and low efficiency.

As shown in Fig. 1, when the twist drill with such a conventional structure is used for drilling, the processing of a metal cutting amount in a corresponding size is simultaneously completed by two symmetrically distributed linear cutting blades so that a relatively large power is required during drilling. Meanwhile, relatively large reaction forces are also applied to two cutting edges so that the cutting edges are easy to be damaged. Processing and cutting processes of the twist drill are analyzed and shown in Fig. 2.

A traditional twist drill is not easy to be positioned during drilling. Two linear cutting blades always cut simultaneously during drilling. The traditional twist drill has an equal cutting metal amount in the entire processing process, has a relatively large cutting torque and power, and is hard to drill.

CN1375373A discloses a twist drill according to the preamble of claim 1.

### SUMMARY

The purpose of the present disclosure is to provide a tool capable of cutting rapidly and drilling while prolonging service life of the tool and increasing operation efficiency. The above purpose is realized by the following technical solution:
An efficient twist drill for layered drilling according to the invention comprises the features of claim 1.

Preferable embodiments are defined in the dependent claims.

Through step-like cutting, the twist drill can be positioned easily during layered drilling operation, has low cutting resistance, produces less cutting heat, has high drilling efficiency and long service life, and greatly improves drilling performance of the drill bit so that a processed circular hole has high precision and few burrs at an edge where the drill bit exits.

### BRIEF DESCRIPTION OF THE DRAWINGS

Fig. 1 is a structural schematic diagram of an existing twist drill, wherein cutting blades are two linear cutting edges;
Fig. 2 is a side view of Fig. 1;
Fig. 3 is a schematic diagram of cutting of cutting edges during drilling of an existing twist drill;
Fig. 4 is a partial enlarged view of Fig. 3;
Fig. 5 is a schematic diagram of the present disclosure;
Fig. 6 is a partial enlarged view of Fig. 5;
Fig. 7 is a side view of Fig. 5;
Fig. 8 is a partial enlarged view of Fig. 5;
Fig. 9 is a schematic diagram of the present disclosure during drilling;
Fig. 10 is a partial enlarged view of Fig. 9;
Fig. 11 is a schematic diagram of the present disclosure;
Fig. 12 is a side view of Fig. 11; and
Fig. 13 is another structural schematic diagram of a cutting portion of the present disclosure.

### DETAILED DESCRIPTION OF THE EMBODIMENTS

The present disclosure is described in detail below with reference to drawings.

A cutting area of an ordinary twist drill during drilling is generally described at first, as shown in Figs. 1-4.

An existing traditional twist drill is not easy to be positioned during drilling. Two linear cutting blades (i.e., main cutting blades 1) always cut simultaneously during drilling. The traditional twist drill has an equal cutting metal amount in the entire processing process, has a relatively large cutting torque and power, and is hard to drill. The traditional twist drill has a single-blade cutting area of S1= S2 = W × h and a total cutting area of S = 2S1 = 2S2 = 2 × W × h during drilling.

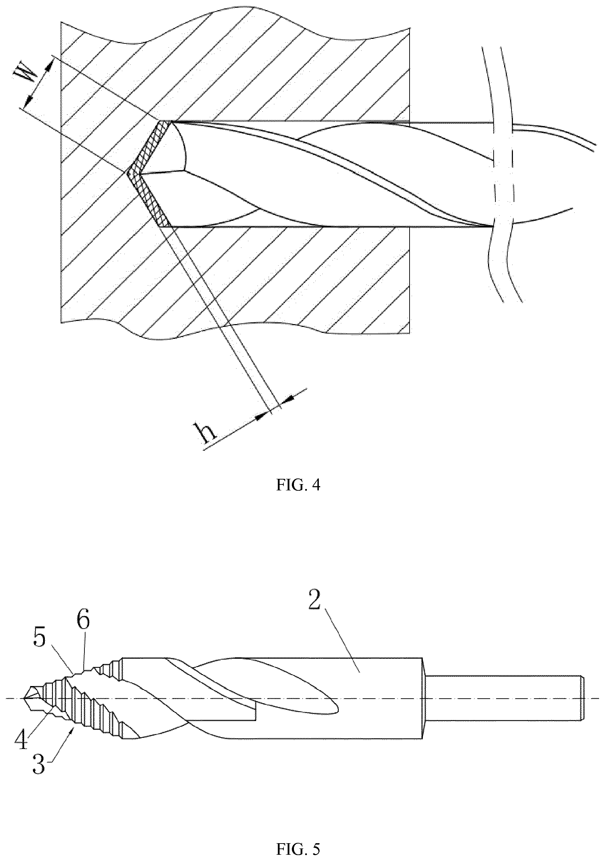

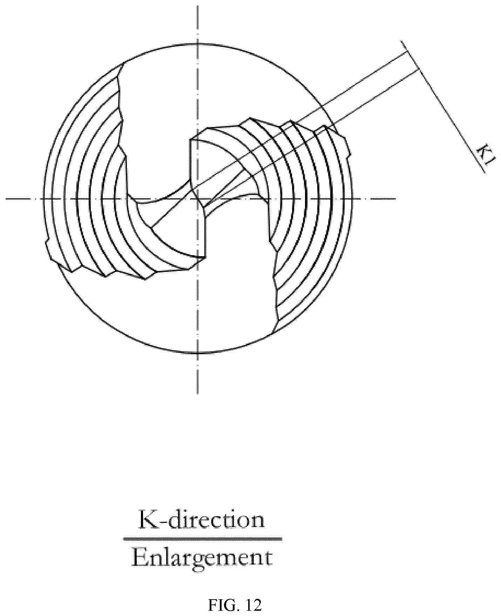

Then, a structure of the present disclosure is described in detail below, as shown in Figs. 5-12.

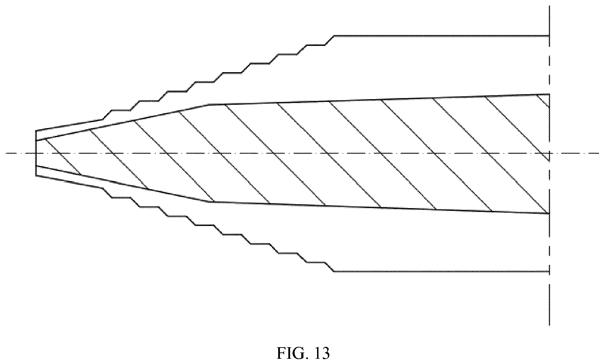

An efficient twist drill for layered drilling of the present disclosure comprises a drill bit body 2 which can be the ordinary twist drill. The drill body 2 usually comprises a shank portion and an operation portion; the operation portion has a cutting portion at a front end and a guide portion at a rear end; and the shank portion is connected with the guide portion. A plurality of flutes 4 distributed in parallel and at intervals are symmetrically arranged along a flank surface 3 of the cutting portion; the flutes 4 divide main cutting blades into a plurality of first cutting blades 5 and second cutting blades 6; and connecting lines of the first cutting blades 5 and the second cutting blades 6 form a step-like structure (which can also be called a ladder-like structure), i.e., the main cutting blades of the present disclosure are step-like structures. Meanwhile, a cross section of the entire flank surface 3 is also a step-like structure. Certainly, except the main cutting blades, all flank surface portions can also be of other shapes. The flank surface adopts a ladder-like structure so that the flank surface does not touch workpieces during cutting; secondly, the strength of the flank surface is enhanced; and thirdly, the flank surface is processed conveniently during manufacturing. The second cutting blades 6 are parallel to an axis line of the drill bit body, or an angle of 0-20 degrees is formed between the second cutting blades 6 and the axis line of the drill bit body so that tail ends of the second cutting blades 6 are inclined downwards, and only starting ends of the second cutting blades (i.e., tops of the first cutting blades) touch the workpieces during cutting, as shown in Fig. 13.

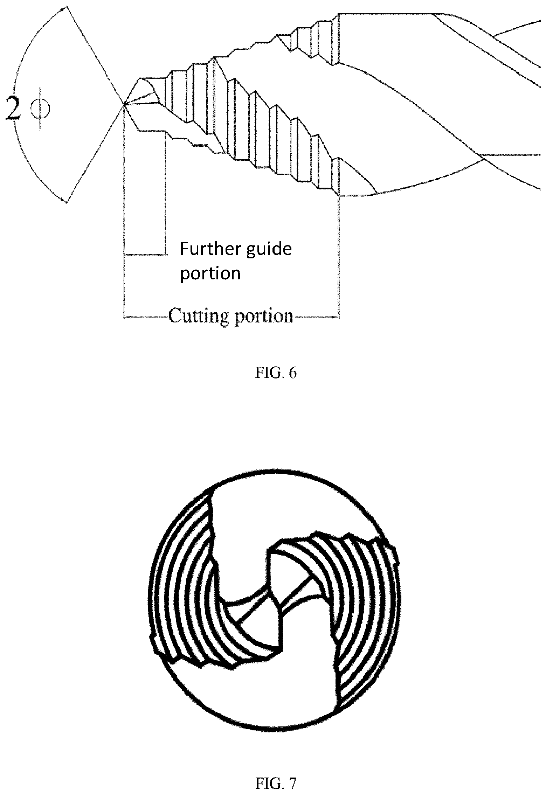

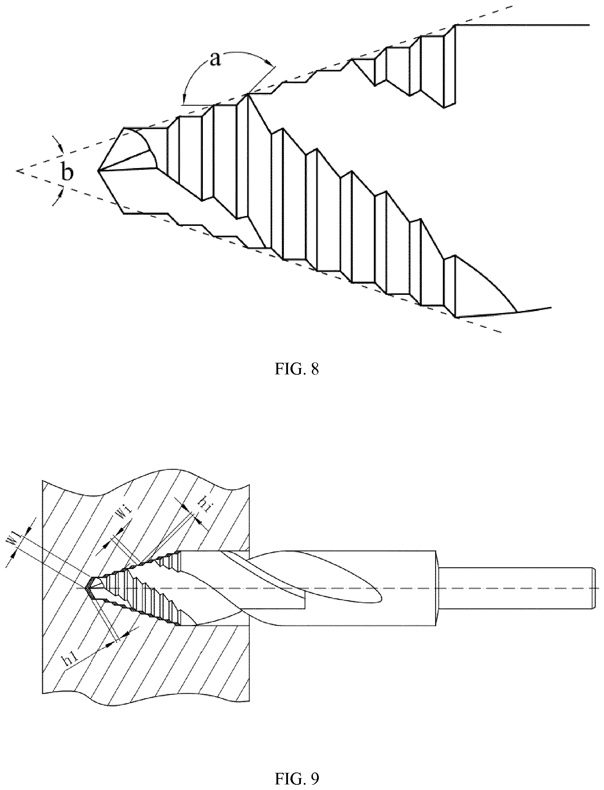

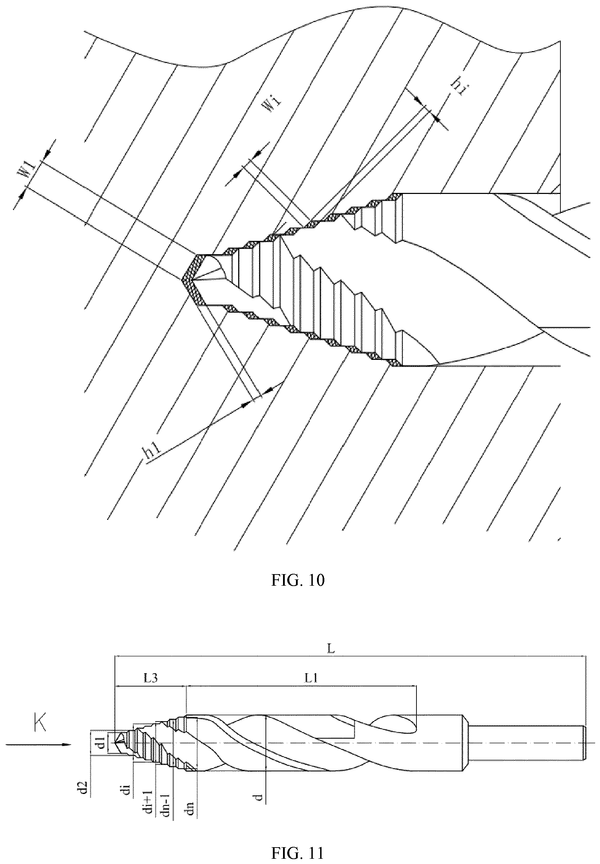

Preferably, the second cutting blades 6 are parallel to the axis line of the drill bit body; an angle *a* of 90-140 degrees is formed between the first cutting blades 5 and the second cutting blades 6; and the first cutting blades are parallel to each other, and certainly, can also be set to be unparallel structures according to actual needs. Preferably, the first cutting blades are parallel to each other in the present disclosure. Since flutes need to be dug in the flank surface to form the ladder-like main cutting blades, the area of the flank surface 3 will be set to be slightly larger, and an angle *b* formed by the connecting lines of the top endpoints of the first cutting blades 5 (i.e., the angle formed between two main cutting blades) is 20-60 degrees, as shown in Fig. 8. Certainly, a foremost end of the cutting portion of the present disclosure can also be set in a shape as shown in Fig. 13.
In order to drill stably, a further guide portion (i.e., for the first cutting blade and the second cutting blade at the foremost end of the drill bit body, the first cutting blade is in contact with the workpiece at first) is formed at the foremost end of the drill bit body 2. An apex angle of the further guide portion is an angle of 90-140 degrees, and preferably, 118 degrees is set as an optimal angle. Certainly, the angle of the further guide portion can be changed properly according to different processing materials, as shown in Fig. 6.
The cutting blades of the further guide portion are relatively short, so the drilling will be relatively stable. Moreover, since the main cutting blades are divided into the first cutting blades with relatively small areas, the cutting torque and the power are dispersed by the first cutting blades so as to save efforts during drilling with force. It should be noted that the foremost first cutting blade in contact with the workpiece at first in the present disclosure may be unparallel to the subsequent first cutting blade.
The flutes of the present disclosure may be arc-shaped flutes adapted to a radian of the flank surface, or the connecting lines of the flutes form a spiral structure. The ladder-like cutting blade of the present disclosure can be applied to drilling cutting tools such as screw taps, expanding drills, countersink drills, reamers, etc. Even only one ladder-like drill bit is arranged, while the ladder-like drill bit can be combined with different cutting tools.
As shown in Fig. 11, the flank surface between the flutes forms a step-like circular arc; and a diameter d of the circular arc between the two opposite second cutting blades is gradually increased to form a step-like structure. For example, from a diameter d1 between the foremost second cutting blades to a diameter dn between the last second cutting blades, the diameters show a gradually increasing trend; and the increased size can be constant or variable.
In the present disclosure, the number of steps and the lengths of the first cutting blades and the second cutting blades can be flexibly selected according to the size of drilled holes and the area of the flank surface. In general, on the flank surfaces with the equal area, the more the number of the divided first cutting blades and second cutting blades is, the better. In this case, the smaller the contact area between the first cutting blades and the workpiece is, the smaller the resistance borne by the cutting tool during drilling is, and the easier the drilling is. In view of the above characteristics, the step-like cutting blades should be provided as many as possible; the diameter between the foremost second cutting blades should be set as small as possible, but the diameter between the foremost second cutting blades will be limited by a standard drill core thickness of the drill bit.

In the present disclosure, two linear main cutting blades of the twist drill are designed as a plurality of ladder-like blades to decompose the resistance of the to-be-cut metal layer. As shown in Figs. 9 and 10, a cut large block S is decomposed into n small blocks Si; the area of each small block Si is Si = Wi × hi, Sn = Wn × hi; and the total cutting area is S = S1 + ... + Si + ... + Sn.

When the drill bit starts to come into contact with the surface of the workpiece, a guide hole is first drilled by a very small drill point (i.e., the guide portion) of the first section. The small drill point is easy to be positioned and drill the small hole due to a small diameter. Then, the small hole is gradually expanded by a subsequent gradually-widened ladder blade until a final size of the twist drill is reached. In the gradual drilling and hole expanding processes, compared with the one-process continuous cutting of the linear cutting blade of a conventional twist drill, the cutting resistance is reduced and the feeding is easy and fast.

The beneficial effects brought by the technical solutions of the present disclosure are as follows:
(1) in the whole processing process, the drilling force is relatively small, uniform and reasonable;
(2) the artificial hand-held electric tools can be operated stably and durably;
(3) the drilling processing precision is ensured, and the occurrence of equipment and personal accidents is avoided;
(4) all the step-like cutting edges of the cutting tool are worn uniformly and consistently, thereby prolonging service of the cutting tool (about 3-8 times);
(5) unnecessary damage of the cutting tool during use and scrapped workpieces are reduced;
(6) the processing difficulty and cost are reduced, and processing efficiency is increased; and
(7) a flange has few burrs at an edge where the drill bit exits.

The above are only preferred embodiments of the present disclosure and are not intended to limit the embodiments of the present disclosure.

## Claims

1. An efficient twist drill for layered drilling, comprising a drill bit body (2),
wherein the drill bit body (2) comprises a shank portion and an operation portion; the shank portion is connected with the operation portion; the operation portion has a cutting portion at a front end and a guide portion at a rear end, and the shank portion is connected with the guide portion, wherein a plurality of flutes (4) forming a spiral structure and distributed in parallel and at intervals are symmetrically arranged along a flank surface (3) of the cutting portion and the guide portion; the flutes (4) divide main cutting blades into a plurality of first cutting blades (5) and second cutting blades (6), and the first cutting blades (5) on a respective step are equal in height,
wherein from a diameter (d) between the foremost second cutting blades (d1) to a diameter of the last second cutting blades (d2), the diameters show a gradually increasing trend,
wherein a length (L1) of the guide portion at the rear end is larger than the length (L3) of the cutting portion at the front end;
**characterized in that**
in a front view of the twist drill, connecting lines of the first cutting blades (5) and
the second cutting blades (6) form a step-like structure.

2. The efficient twist drill for layered drilling according to claim 1, wherein the second cutting blades (6) are parallel to an axis line of the drill bit body (2); and an angle of 90-140 degrees is formed between the first cutting blades (5) and the second cutting blades (6).

3. The efficient twist drill for layered drilling according to claim 1, wherein an acute angle is formed between the second cutting blades (6) and the axis line of the drill bit body (2), so that tail ends of the second cutting blades (6) are inclined downwards.

4. The efficient twist drill for layered drilling according to claim 1, wherein an angle formed by connecting lines of top endpoints of the first cutting blades (5) is 20-60 degrees.

## Patentansprüche

1. Effizienter Spiralbohrer zum Schichtbohren, mit einem Bohrmeißelkörper (2),
wobei der Bohrmeißelkörper (2) einen Schaftabschnitt und einen Arbeitsabschnitt aufweist;
der Schaftabschnitt mit dem Arbeitsabschnitt verbunden ist; der Arbeitsabschnitt einen Schneidabschnitt an einem vorderen Ende und einen Führungsabschnitt an einem hinteren Ende aufweist, und der Schaftabschnitt mit dem Führungsabschnitt verbunden ist, wobei eine Vielzahl von Nuten (4), die eine spiralförmige Struktur bilden und parallel und in Abständen verteilt sind, symmetrisch entlang einer Flankenfläche (3) des Schneidabschnitts und des Führungsabschnitts angeordnet sind; die Nuten (4) Hauptschneidklingen in eine Vielzahl von ersten Schneidklingen (5) und zweiten Schneidklingen (6) unterteilen und die ersten Schneidklingen (5) auf einem jeweiligen Gang gleich hoch sind,
wobei von einem Durchmesser (d) zwischen den vordersten zweiten Schneidklingen (d1) bis zu einem Durchmesser der letzten zweiten Schneidklingen (d2) die Durchmesser eine sich allmählich vergrößernde Tendenz aufweisen,
wobei eine Länge (L1) des Führungsabschnitts am hinteren Ende größer ist als die Länge (L3) des Schneidabschnitts am vorderen Ende;
**dadurch gekennzeichnet, dass**
in einer Vorderansicht des Spiralbohrers Verbindungslinien der ersten Schneidklingen (5) und der zweiten Schneidklingen (6) eine stufenartige Struktur bilden.

2. Effizienter Spiralbohrer zum Schichtbohren nach Anspruch 1, wobei die zweiten Schneidklingen (6) parallel zu einer Achsenlinie des Bohrmeißelkörpers (2) verlaufen und zwischen den ersten Schneidklingen (5) und den zweiten Schneidklingen (6) ein Winkel von 90-140° gebildet ist.

3. Effizienter Spiralbohrer zum Schichtbohren nach Anspruch 1, wobei zwischen den zweiten Schneidklingen (6) und der Achsenlinie des Bohrmeißelkörpers (2) ein spitzer Winkel gebildet ist, so dass die hinteren Enden der zweiten Schneidklingen (6) nach unten geneigt sind.

4. Effizienter Spiralbohrer zum Schichtbohren nach Anspruch 1, wobei ein Winkel, der durch Verbindungslinien der oberen Endpunkte der ersten Schneidklingen (5) gebildet ist, 20-60° beträgt.

## Revendications

1. Foret hélicoïdal efficace pour forage en couches, comprenant un corps de trépan (2),
dans lequel le corps de trépan (2) comprend une partie tige et une partie d'actionnement ;
la partie tige est reliée à la partie d'actionnement ; la partie d'actionnement a une partie de coupe au niveau d'une extrémité avant et une partie de guidage au niveau d'une extrémité arrière, et la partie tige est reliée à la partie de guidage, dans lequel une pluralité de cannelures (4) formant une structure en spirale et réparties en parallèle et à intervalles sont symétriquement agencées le long d'une surface de flanc (3) de la partie de coupe et la partie de guidage ; les cannelures (4) divisent des lames de coupe principales en une pluralité de premières lames de coupe (5) et secondes lames de coupe (6), et les premières lames de coupe (5) sur un étage respectif sont égales en hauteur,
dans lequel d'un diamètre (d) entre les secondes lames de coupe les plus en avant (d1) à un diamètre des dernières secondes lames de coupe (d2), les diamètres présentent une tendance d'augmentation progressive,
dans lequel une longueur (L1) de la partie de guidage au niveau de l'extrémité arrière est supérieure à la longueur (L3) de la partie de coupe au niveau de l'extrémité avant ;
**caractérisé en ce que**
dans une vue avant du foret hélicoïdal, des lignes de liaison des premières lames de coupe (5) et des secondes lames de coupe (6) forment une structure étagée.

2. Foret hélicoïdal efficace pour forage en couches selon la revendication 1, dans lequel les secondes lames de coupe (6) sont parallèles à une ligne d'axe du corps de trépan (2) ; et un angle de 90-140 degrés est formé entre les premières lames de coupe (5) et les secondes lames de coupe (6).

3. Foret hélicoïdal efficace pour forage en couches selon la revendication 1, dans lequel un angle aigu est formé entre les secondes lames de coupe (6) et la ligne d'axe du corps de trépan (2), de sorte que des extrémités de queue des secondes lames de coupe (6) sont inclinées vers le bas.

4. Foret hélicoïdal efficace pour forage en couches selon la revendication 1, dans lequel un angle formé par des lignes de liaison de points d'extrémité supérieurs des premières lames de coupe (5) est de 20-60 degrés.
